(19) Europäisches Patentamt
European Patent Office
Office européen des brevets

(11) Numéro de publication: **0 120 720**
**B1**

(12) **FASCICULE DE BREVET EUROPÉEN**

(45) Date de publication du fascicule du brevet: **08.04.87**

(51) Int. Cl.⁴: **C 08 F 2/24**

(21) Numéro de dépôt: **84400117.2**

(22) Date de dépôt: **20.01.84**

(54) **Dispersions aqueuses stables et amphotères de polymères synthétiques.**

(30) Priorité: **28.01.83 FR 8301300**

(43) Date de publication de la demande:
**03.10.84 Bulletin 84/40**

(45) Mention de la délivrance du brevet:
**08.04.87 Bulletin 87/15**

(84) Etats contractants désignés:
**AT BE CH DE FR GB IT LI LU NL SE**

(56) Documents cité:
**US-A-3 399 159**
**US-A-3 404 114**
**US-A-3 808 158**

(73) Titulaire: **RHONE- POULENC SPECIALITES CHIMIQUES, "Les Miroirs" 18, Avenue d'Alsace, F-92400 Courbevoie (FR)**

(72) Inventeur: **Leising, Frédéric, 38 rue de Coubron, F-93410 Vaujours (FR)**

(74) Mandataire: **Fabre, Madeleine- France, RHONE-POULENC INTERSERVICES Service Brevets Chimie 25, quai Paul Doumer, F-92408 Courbevoie Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**EP 0 120 720 B1**

LIBER, STOCKHOLM 1987

**Description**

La présente invention a pour objet des dispersions aqueuses stables et amphotères de polymères synthétiques obtenues par polymérisation en émulsion.

Il est connu d'après le brevet américain n°3.404.114 de préparer des latex amphotères en deux étapes, la 1ère étape consistant à polymériser un acide carboxylique insaturé et un ester d'acide insaturé et la 2ème étape consistant, après neutralisation du milieu à un pH voisin de 7 à l'aide d'un agent de neutralisation azoté, à polymériser au sein dudit milieu un alkylaminoalkyl ester d'un acide carboxylique insaturé. Un tel procédé nécessite une opération de neutralisation intermédiaire.

Il a été constaté qu'au cours de l'opération de polymérisation ou des opérations de traitement (neutralisation, stripping...) des dispersions aqueuses, il se forme un pourcentage appréciable de grains parasites qui est dû à un manque de stabilité des particules de polymère. Ce phénomène engendre une augmentation des coûts de production (perte de rendement à la filtration) et une baisse de la qualité des dispersions.

Le but de la demanderesse a été de préparer des dispersions aqueuses stables et amphotères de polymères synthétiques, sans étape de neutralisation intermédiaire; lesdites dispersions présentent un taux de grains parasites inférieur à 500 parties par million (soit 0,05 % en poids par rapport au polymère).

Les dispersions aqueuses stables et amphotères de polymères synthétiques faisant l'objet de l'invention sont caractérisées en ce qu'elles sont obtenues en mettant en présence au moins un composé azoté insaturé totalement ou partiellement hydrolysable en milieu acide ou alcalin, susceptible de générer des charges anioniques par hydrolyse totale ou partielle en milieu basique, avec le milieu réactionnel (A) d'une opération de polymérisation en émulsion aqueuse d'au moins un monomère non ionogène copolymérisable avec ledit composé azoté insaturé hydrolysable, ledit milieu réactionnel (A) contenant des charges essentiellement cationiques apportées par au moins une substance génératrice de charges cationiques liables chimiquement auxdits polymères synthétiques, la quantité de substance génératrice de charges cationiques mise en oeuvre correspondant à un rapport nombre de charges cationiques générées par ladite substance génératrice de charges cationiques/ nombre de charges anioniques générées par le composé azoté insaturé en milieu basique inférieur à 1.

Ledit composé azoté insaturé hydrolysable en milieu acide ou alcalin peut être mis en présence du milieu réactionnel (A) à un stade quelconque de l'opération de polymérisation du ou des monomères non ionogènes copolymérisables avec le composé azoté insaturé hydrolysable. Ainsi il peut être totalement présent dans le milieu réactionnel (A) dès le départ de l'opération de polymérisation; il peut être également introduit en continu ou en discontinu tout au long de l'opération de polymérisation; il peut aussi n'être introduit dans le milieu réactionnel (A) qu'après un certain taux de transformation du monomère non ionogène (à partir de 30 % de taux de transformation, par exemple) ou bien en fin de polymérisation (par exemple entre 90 et 98 % de taux de conversion du monomère non ionogène).

On considère que lesdits composés azotés insaturés sont partiellement hydrolysables lorsque leur taux d'hydrolyse en milieu acide ou alcalin dans les conditions réactionnelles de polymérisation est de l'ordre de 10 % au minimum.

Selon l'invention les composés azotés insaturés totalement ou partiellement hydrolysables, en milieu acide ou alcalin, répondent à la formule générale:

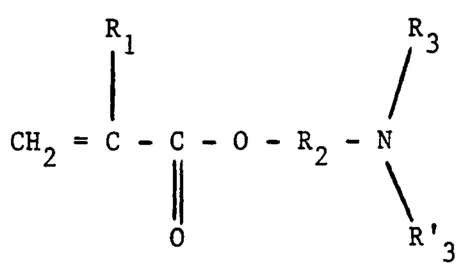

où:. $R_1$ représente un atome d'hydrogène ou un groupe méthyle,

. $R_2$ représente un groupe méthylène ou éthylène,

. $R_3$ représente un atome d'hydrogène ou un groupe alkyle linéaire contenant de 1 à 4 atomes de carbone,

. $R'_3$ représente un atome d'hydrogène ou un groupe alkyle linéaire contenant de 1 à 4 atomes de carbone, ainsi qu'un groupe alkyle ramifié contenant 3 ou 4 atomes de carbone lorsque $R_3$ représente un atome d'hydrogène, le nombre total d'atomes de carbone présents dans les groupes $R_2$, $R_3$ et $R'_3$ étant inférieur ou égal à 8 et de préférence inférieur ou égal à 6.

Répondent à cette formule le diméthylaminométhylacrylate ou méthacrylate, le diméthylaminoéthylacrylate ou méthacrylate, le tertiobutylaminométhylacrylate ou méthacrylate, le tertiobutylaminoéthylacrylate ou méthacrylate.

Parmi les monomères non ionogènes copolymérisables avec les composés azotés insaturés hydrolysables, on peut citer:

. les composés vinylaromatiques tels que le styrène, l'α-méthylstyrène, le vinyltoluène, le monochlorostyrène...

. les esters vinyliques tels que l'acétate de vinyle, le propionate de vinyle, le versatate de vinyle, le butyrate de vinyle...

. les nitriles éthyléniques tels que l'acrylonitrile, le méthacrylonitrile...

. les esters carboxyliques éthyléniques tels que le méthyl-, éthyl-, propyl-, isopropyl-, butyl-, 2-éthylhexyl-, hydroxyéthyl-, hydroxypropyl- ou glycidyl-acrylate, le méthyl-, éthyl-, propyl-, butyl-, hydroxyéthyl-, hydroxypropyl- ou glycidyl-méthacrylate, etc...

. les dialkylesters des diacides carboxyliqués éthyléniques, tels que les dialkylesters de l'acide fumarique, maléique, itaconique...

. les amides éthyléniques et leurs dérivés N-substitués tels que l'acrylamide, le méthacrylamide, le N-méthylol-, N-méthoxyméthyl-acrylamide ou -méthacrylamide...

Lesdits monomères non-ionogènes peuvent être utilisés seuls ou bien en mélange entre eux lorsqu'ils sont copolymérisables entre eux.

Les substances génératrices de charges cationiques pouvant être mises en oeuvre sont des produits non hydrolysables ou partiellement hydrolysables c'est-à-dire des produits dont le taux d'hydrolyse dans les conditions réactionnelles de polymérisation est inférieur ou égal à 50 % environ.

Parmi celles-ci on peut citer:

1) Les amorceurs de polymerisation générateurs de radicaux présentant une extrémité cationique tels que le chlorhydrate de 2,2'azobis(2-amidinopropane), le chlorhydrate d'azo bis-NN'diméthylène isobutyramidine.

2) Les sels insaturés copolymérisables d'onium polycoordiné d'un élément des groupes VB et VI B de la classification périodique tel que l'azote, le phosphore, le soufre.

On entend par "sels insaturés d'onium polycoordiné d'un élément des groupes VB et VIB" tout sel présentant un cation onium dans lequel toutes les valences de l'élément des groupes VB et VIB sont satisfaites par des groupements hydrocarbonés, élément dont la valence libre est saturée par un atome de carbone, au moins un desdits groupements hydrocarbonés étant insatuté.

A titre d'exemple on peut citer les sels insaturés d'ammonium quaternaire présentant la formule suivante:

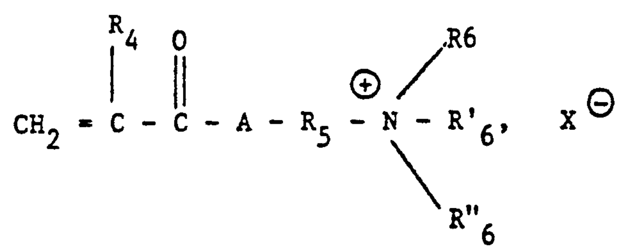

où . $X^-$ est choisi parmi les anions suivants: $Cl^-$, $Br^-$, $I^-$, $SO_4H^-$, $SO_4^-$, $CH_3SO_4^-$, $C_2H_5SO_4^-$, $CH_3COO^-$,

. $R_4$ représente un atome d'hydrogène ou un groupe méthyle

. A représente un atome d'oxygène ou un groupe -NH

. $R_5$ représente un groupé alkylène linéaire ou ramifié contenant de 1 à 18 atomes de carbone, de préférence de 1 à 10 atomes de carbone.

. $R_6$, $R'_6$, $R''_6$ sont semblables ou différents et représentent un groupe alkyle contenant de 1 à 4 atomes de carbone éventuellement substitué par un radical hydroxy, un groupe phényle éventuellement substitué par un radical alkyle contenant de 1 à 9 atomes de carbone.

. le nombre total d'atomes de carbone présent dans les groupes $R_5$, $R_6$, $R'_6$ et $R''_6$ est supérieur à 4 quand A représente de l'oxygène.

Des produits répondant à cette formule sont le chlorure de triméthylaminoéthylacrylamide ou méthacrylamide, le bromure de triméthylaminopropylacrylamide ou méthacrylamide, le méthylsulfate de triméthylaminobutylacrylamide ou méthacrylamide, le chlorure de triméthylaminopropylméthacrylate.

Parmi les sels d'onium insaturés on peut également citer:

- les sels insaturés de pyridinium, quinolinium, imidazolium, benzimidazolium....tels que:

. le bromure de 1-méthyl 2-vinylpyridinium,

. le chlorure de 1-éthyl 2-vinylpyridinium

. le méthylsulfate de 1-éthyl 2-vinylpyridinium

. le chlorure de 1-benzyl 4-vinylpyridinium

. l'iodure de 1-méthyl 2-vinylquinolinium

. le bromure de N-vinyl N'-méthylimidazolium

. le bromure de 1-vinyl 3-méthylbenzimidazolium

- le chlorure de (2-méthacryloxy)diméthylsulfonium
- le méthylsulfate de méthyldiallylsulfonium
- le bromure de triméthylvinylphosphonium.

La mise en oeuvre de la substance génératrice de charges cationiques dans le milieu réactionnel (A) peut être préalable à celle du composé azoté insaturé hydrolysable ou concomittante de celle dudit composé azoté insaturé.

Ladite substance génératrice de charges cationiques peut également être présente dans le milieu réactionnel (A) au départ de l'opération de polymérisation par l'intermédiaire d'une "semence cationique" c'est-à-dire d'un-polymère ou copolymère préalablement préparé par polymérisation en émulsion aqueuse en milieu cationique du ou des monomères non-ionogènes en présence de la quantité désirée de substance génératrice de charges cationiques.

Pour une bonne réalisation du procédé permettant de préparer les dispersions amphotères de polymères synthétiques faisant l'objet de l'invention, on met en oeuvre une quantité de composé azoté insaturé hydrolysable correspondant à environ 1-20 %, de préférence 1-10 %, en poids par rapport au poids de monomère(s) non ionogène(s), et ce exprimé en poids de matière sèche;

La quantité de substance génératrice de charges cationiques favorablement mise en oeuvre est fonction du taux d'hydrolyse du composé azoté insaturé hydrolysable et de la substance génératrice de charges cationiques dans les conditions réactionnelles de l'opération de polymérisation. Ainsi pour un taux d'hydrolyse de 90 % environ du composé azoté insaturé hydrolysable et de 0 % de la substance génératrice de charges cationiques, on mettra favorablement en oeuvre une quantité de substance génératrice de charges cationiques correspondant à un rapport molaire R = nombre de moles de substance génératrice de charges cationiques + nombre de moles de composé azoté insaturé hydrolysable/nombre de moles de monomères non ionogènes, compris entre 1 et 15, de préférence entre 1 et 10; pour un taux d'hydrolyse de 10 % environ du composé azoté insaturé hydrolysable et de 0 % de la substance génératrice de charges cationiques, ledit rapport molaire R est favorablement compris entre 0,1 et 1,5 et de préférence entre 0,2 et 1; pour un taux d'hydrolyse de 90 % environ du composé azoté insaturé hydrolysable et de 25 % environ de la substance génératrice de charges cationiques, ledit rapport molaire est favorablement compris entre 0,5 et 10, et de préférence entre 1 et 5.

L'opération de copolymérisation du composé azoté insaturé et du ou des monomères ionogènes est réalisée dans les conditions classiques de polymérisation en émulsion aqueuse en milieu cationique à une température comprise entre 60 et 90°C et généralement entre 75 et 85°C, à un pH quelconque (pouvant varier de 3 à 12 et de préférence de 5 à 9) en présence d'un amorceur cationique ou non-ionique, éventuellement d'un agent émulsifiant cationique ou non-ionique et en outre en présence de la substance génératrice de charges cationiques, ladite substance étant constituée d'un sel insaturé copolymérisable d'onium polycoordiné d'un élément du groupe VB ou VI B et/ou d'un excès d'amorceur cationique.

Les amorceurs cationiques pouvant être mis en oeuvre sont ceux déjà cités ci-dessus comme exemple de substance génératrice de charges cationiques.

Comme exemples d'amorceurs non-ioniques on peut citer:

. les peroxydes et hydroperoxydes minéraux ou organiques, hydrosolubles ou organosolubles générateurs de radicaux libres non chargés tels que le peroxyde d'hydrogène, le peroxyde de benzoyle, l'hydroperoxyde de tert-butyle, l'hydroperoxyde de cumène, le tert-butylperbenzoate, le peroxyde de diisopropylbenzène, le peroxyde de méthyléthylcétone.

. les systèmes redox obtenus en associant auxdits peroxydes ou hydroperoxydes un réducteur tel que l'acide ascorbique, les sucres, les sels métalliques polyvalents, les sulfites, hydrosulfites, sulfoxalates, thiosulfates, bisulfites de sodium, calcium....le formaldéhyde sulfoxylate de sodium ou de zinc....

. les composés azoaliphatiques présentant un groupe azoacyclique et un atome de carbone aliphatique sur chaque atome d'azote, au moins un des atomes de carbone étant tertiaire, tels que l'azobisisobutyronitrile, le 2,2'azo bis(2,4-diméthylvaléronitrile), le 2,2' azo bis(2,4,4 triméthylvaléronitrile), le 2,2' azo bis(2,4 diméthyl-4 méthoxyvaléronitrile).

Comme exemples d'émulsifiants non-ioniques on peut citer les alcools gras polyéthoxylés, les alkylphénols polyéthoxylés, les acides gras polyéthoxylés...

Comme exemples d'émulsifiants cationiques on peut citer:

- le décylammonium méthylsulfate,
- le bromure de N-éthyldodécylammonium,
- le chlorure de cétylammonium,
- le bromure de cétylammonium,
- le bromure de stéarylammonium,
- le bromure de cétyldiméthylbenzylammonium,
- le chlorure de N,N-diméthyldodécylammonium,
- l'iodure de N-méthyltridécylammonium,

les chlorures, bromures, sulfates, méthylsulfates ou acétates d'amines grasses éthoxylées.

La quantité d'amorceur mise en oeuvre pour réaliser l'opération de polymérisation est fonction du ou des monomères mis en oeuvre et de la température de polymérisation; celle-ci est généralement de l'ordre de 0,1 à 5 % en poids par rapport au poids total de monomères, et de préférence de l'ordre de 0,1 à 2 %.

Il est bien évident que si l'amorceur est le principal constituant ou un des principaux constituants de la substance génératrice de charges cationiques, un excès par rapport à ces quantités doit être utilisé.

La quantité d'émulsifiant cationique ou non-ionique mise en oeuvre pour stabiliser les particules de copolymères peut aller jusqu'à 2 % du poids total de monomères.

Les dispersions aqueuses stables et amphotères de polymères synthétiques faisant l'objet de l'invention présentent un potentiel zéta pouvant varier depuis + 80mV à - 60mV lorsque le pH passe de 2 à 12 par exemple.

Lesdites dispersions amphotères peuvent être utilisées comme liants pour le couchage du papier, pour la préparation de voiles de non-tissés, pour le revêtement de substrats métalliques etc....

Les exemples suivants sont donnés à titre indicatif et ne peuvent être considérés comme une limite du domaine et de l'esprit de l'invention.

**EXEMPLE 1**

L'opération de polymérisation décrite ci-après est réalisée dans un autoclave de 5 litres de capacité muni d'un agitateur du type à ancre tournant à 180 t/mn.

On charge à froid dans l'autoclave:
- 866 g d'eau désionisée,
- 7,5 g de bromure de cétyldiméthylbenzylammonium
- 15 g de chlorure de triméthylaminopropylméthacrylamide,
- 15 g de diméthylaminoéthylacrylate.

On porte l'autoclave à une température de 75°C; on introduit alors 7,5 g de chlorhydrate de 2-2'azobis(2 amidinopropane) comme amorceur cationique avec 50 g d'eau désionisée, puis en continu pendant 5 heures sous débit constant:
- 750 g d'acrylate de butyle,
- 660 g de styrène,
- 60 g de diméthylaminoéthylacrylate.

On laisse ensuite la réaction se poursuivre pendant 4 heures à 75°C. Après un temps total de fonctionnement de 9 heures la réaction est arrêtée par refroidissement.

Le produit obtenu est un latex stable sans croûtes présentant les caractéristiques suivantes:

| | | |
|---|---|---|
| - pH | 8,1 | |
| - quantité d'extrait sec | 45,0 % | en poids |
| - viscosité Brookfield (50t/mn) | 250 | mPa.s |
| - diamètre moyen des particules | 0,11 | µ |
| - taux de grains | 240 | ppm |

Le taux de grains est déterminé par tamisage au travers de toiles présentant des ouvertures de mailles de 40 et 100 µ. La teneur totale en grains correspond à la somme des teneurs en grains des différents tamis.

Le caractère amphotère de la dispersion ainsi préparée est mis en évidence par mesure du potentiel zéta en fonction du pH. La mesure est effectuée à l'aide d'un appareil de microélectrophorèse MARK II fabriqué par RANK BROTHERS et réalisée à une concentration de 0,05 % en polymère sous une tension de mesure de 80 volts et à une température de 25°C.

Les résultats de cette mesure sont les suivants:

| pH | potentiel zêta en mV |
|---|---|
| 4,5 | +30 |
| 8,3 | 0 (point isoélectrique) |
| 9 | -40 |

**EXEMPLE 2**

On charge à froid dans l'autoclave:
- 940 g d'eau désionisée
- 9,6 g de bromure de cétyldiméthylbenzylammonium
- 9,6 g de chlorure de triméthylaminopropylméthacrylamide
- 24 g de diméthylaminoéthylacrylate
- 72 g d'acétate de vinyle.

On porte l'autoclave à une température de 80° C; on introduit alors sous débit constant pendant 5 heures:
- 1100 g d'acétate de vinyle
- 9 g de chlorhydrate de 2-2' azobis(2 amidinopropane)
- 210 g d'eau désionisée
- 3,6 g de bicarbonate de sodium.

On laisse la réaction se dérouler pendant 4 heures.
On obtient un latex stable exempt de croûtes et présentant les caractéristiques suivantes:

| | | |
|---|---|---|
| - pH | 4,2 | |
| - quantité d'extrait sec | 47,5 | % en poids |
| - viscosité Brookfield (50 t/mn) | 165 | mPa.s |
| - diamètre moyen des particules | 0,1 | µ |
| - taux de grains | 165 | ppm |

Les résultats de mesure du potentiel zéta sont les suivants:

| pH | potentiel zêta en mV |
|---|---|
| 4,5 | +60 |
| 8,5 | 0 |
| 9 | -30 |

**EXEMPLE 3**

On charge à froid dans l'autoclave:
- 866 g d'eau désionisée
- 7,5 g de bromure de cétyldiméthylbenzylammonium
- 15 g de chlorure de triméthylaminopropylméthacrylamide
- 15 g de diméthylaminoéthylméthacrylate.

On porte l'autoclave à une température de 75°C; on introduit alors 7,5 g de chlorhydrate de 2-2' azobis(2 amidinopropane) avec 50 g d'eau désionisée, puis en continu pendant 5 heures sous débit constant:
- 1410 g de styrène
- 60 g de diméthylaminoéthylméthacrylate

On laisse ensuite la réaction se poursuivre pendant 4 heures à 75°C.
Le produit obtenu est un latex stable sans croûtes présentant les caractéristiques suivantes:

| | |
|---|---|
| - pH | 75 |
| - quantité d'extrait sec | 46,3 % en poids. |
| - viscosité Brookfield (50 t/mn) | 116 mPa.s |
| - diamètre moyen des particules | 0,1 µ |
| - taux de grains | 115 ppm |

Les résultats de mesure du potentiel zéta sont les suivants:

| pH | potentiel zêta en mV |
|---|---|
| 4,5 | + 47 |
| 8,3 | 0 |
| 9 | - 52 |

**EXEMPLE 4**

On charge à froid dans l'autoclave:
- 866 g d'eau désionisée
- 7,5 g de bromure de cétyldiméthylbenzylammonium
- 15 g de chlorure de triméthylaminopropylméthacrylamide
- 15 g de diméthylaminoéthylacrylate.

On porte l'autoclave à une température de 75°C; on introduit alors 7,5 g de chlorhydrate de 2-2' azobis(2 amidinopropane) avec 50 g d'eau désionisée, puis en continu pendant 5 heures sous débit constant:
- 170 g d'acrylate de butyle
- 750 g d'acrylate d'éthyle
- 550 g de méthacrylate de méthyle.

On laisse la réaction se dérouler pendant 4 heures.
On obtient un latex stable exempt de croûtes et présentant les caractéristiques suivantes:

| | | |
|---|---|---|
| - pH | 8,1 | |
| - quantité d'extrait sec | 42,5 | % en poids |
| - viscosité Brookfield (50 t/mn) | 126 | mPa.s |
| - diamètre moyen des particules | 0,12 | μ |
| - taux de grains | 180 | ppm |

Les résultats de mesure de potentiel zéta sont les suivants:

| pH | potentiel zéta en mV |
|---|---|
| 4,5 | + 28 |
| 7,9 | 0 |
| 8,5 | - 30 |

**EXEMPLE 5**

On charge à froid dans l'autoclave:
- 866 g d'eau désionisée
- 7,5 g de bromure de cétyldiméthylbenzylammonium
- 15 g de chlorure de triméthylaminopropylméthacrylamide

On porte l'autoclave à une température de 75°C; on introduit alors 7,5 g de chlorhydrate de 2-2' azobis(2 amidinopropane) avec 50 g d'eau désionisée, puis en continu pendant 5 heures sous débit constant:
- 795 g d'acrylate de butyle
- 675 g de styrène
- 15 g de diméthylaminométhylacrylate.

On laisse la réaction se dérouler pendant 4 heures à 75°C.
On obtient une dispersion qui présente les caractéristiques suivantes:

| | | |
|---|---|---|
| - pH | 7,8 | |
| - quantité d'extrait sec | 46 | % en poids |
| - viscosité Brookfield (50 t/mn) | 90 | mPa.s |
| - diamètre moyen des particules | 0,12 | μ |
| - taux de grains | 470 | ppm |

Les résultats de mesure de potentiel zéta sont les suivants:

| pH | potentiel zêta en mV |
|---|---|
| 4,5 | + 42 |
| 8,2 | 0 |
| 8,8 | - 31 |

**EXEMPLE 6**

On charge à froid dans l'autoclave:
- 866 g d'eau déionisée
- 7,5 g de bromure de cétyldiméthylbenzylammonium
- 15 g de chlorure de triméthylaminopropylméthacrylamide
- 30 g de diméthylaminoéthylméthacrylate.

On porte l'autoclave à une température de 75°C; on introduit alors 7,5 g de chlorhydrate de 2-2' azobis(2 amidinopropane) avec 50 g d'eau désionisée, puis en continu pendant 5 heures sous débit constant:
- 750 g d'acrylate de butyle
- 675 g de styrène
- 30 g de diméthylaminoéthylméthacrylate.

On laisse la réaction se dérouler pendant 4 heures à 75° C.
On obtient un latex exempt de croûtes présentant les caractéristiques suivantes:

| | | |
|---|---|---|
| - pH | 7,8 | |
| - quantité d'extrait sec | 41,9 | % en poids |
| - viscosité Brookfield (50 t/mn) | 96 | mPa.s |
| - diamètre moyen des particules | 0,12 | µ |
| - taux de grains | 450 | ppm |

Les résultats de mesure de potentiel zéta sont les suivants:

| pH | potentiel zêta en mV |
|---|---|
| 4,5 | + 45 |
| 7,2 | 0 |
| 9 | - 50 |

**EXEMPLE 7**

On charge à froid dans l'autoclave:
- 866 g d'eau désionisée
- 7,5 g de bromure de cétyldiméthylbenzylammonium
- 15 g de chlorure de triméthylaminopropylméthacrylamide
- 30 g de diméthylaminoéthylméthacrylate.

On porte l'autoclave à une température de 75°C; on introduit alors 7,5 g de chlorhydrate de 2-2' azobis(2 amidinopropane) avec 50 g d'eau désionisée, puis en continu pendant 5 heures sous débit constant:
- 750 g d'acrylate de butyle
- 705 g de styrène

On laisse la réaction se dérouler pendant 4 heures à 75°C.
On obtient un latex stable exempt de croûtes présentant les caractéristiques suivantes:

| | | |
|---|---|---|
| - pH | 7,8 | |
| - quantité d'extrait sec | 44,6 | % en poids |
| - viscosité Brookfield (50 t/mn) | 104 | mPa.s |
| - diamètre moyen des particules | 0,12 | μ |
| - taux de grains | 410 | ppm |

Les résultats de mesure de potentiel zéta sont les suivants:

| pH | potentiel zêta en mV |
|---|---|
| 4,5 | + 41 |
| 7,9 | 0 |
| 8,8 | - 29 |

**EXEMPLE 8**

On charge à froid dans l'autoclave:
- 866 g d'eau désionisée
- 7,5 g de bromure de cétyldiméthylbenzylammonium
- 15 g de chlorure de triméthylaminopropylméthacrylate
- 15 g de diméthylaminoéthylacrylate.
- 75 g de styrène
- 66 g d'acrylate de butyle.

On porte l'autoclave à une température de 75°C; on introduit alors 7,5 g de chlorhydrate de 2-2' azobis(2 amidinopropane) avec 50 g d'eau désionisée; on attend la fin de l'exothermie (30 mn environ; le taux de transformation est alors de 90 %), puis on introduit en continu pendant 5 heures sous débit constant:
- 594 g d'acrylate de butyle
- 675 g de styrène
- 60 g de diméthylaminoéthylméthacrylate.

ainsi que 15 g de chlorhydrate de 2-2'azobis(amidinopropane) avec 420 g d'eau désionisée.
On laisse la réaction se dérouler pendant 4 heures.
On obtient une dispersion qui présente les caractéristiques suivantes:

| | |
|---|---|
| - pH | 7,8 |
| - quantité d'extrait sec | 45,4 % en poids |
| - viscosité Brookfield (50 t/mn) | 305 mPa.s |
| - diamètre moyen des particules | 0,1 µ |
| - taux de grains | 175 ppm |

Les résultats de mesure de potentiel zéta sont les suivants:

| pH | potentiel zêta en mV |
|---|---|
| 4,5 | + 49 |
| 8,4 | 0 |
| 9 | - 35 |

**EXEMPLE 9**

On charge à froid dans l'autoclave:
- 866 g d'eau désionisée
- 7,5 g de bromure de cétyldiméthylbenzylammonium
- 15 g de diméthylaminoéthylméthacrylate
- 75 g de styrène
- 66 g d'acrylate de butyle.

On porte l'autoclave à une température de 80° C; on introduit alors 15 g de chlorhydrate de 2-2' azobis(2 amidinopropane) avec 50g d'eau désionisée; on attend la fin de l'exothermie (30 mn environ, ce qui correspond à un taux de transformation de 95 %), puis en continu pendant 5 heures sous débit constant:
- 594 g d'acrylate de butyle
- 675 g de styrène
- 60 g de diméthylaminoéthylméthacrylate.

ainsi que 15 g de chlorhydrate de 2-2'azobis(amidinopropane) avec 420 g d'eau désionisée.
On laisse la réaction se dérouler pendant 4 heures.
On obtient un latex stable exempt de croûtes présentant les caractéristiques suivantes:

| | |
|---|---|
| - pH | 8,5 |
| - quantité d'extrait sec | 40,1 % en poids |
| - viscosité Brookfield (50 t/mn) | 78 mPa.s |
| - diamètre moyen des particules | 0,5 µ |
| - taux de grains | 320 ppm |

Les résultats de mesure de potentiel zéta sont les suivants:

| pH | potentiel zêta en mV |
|---|---|
| 4,5 | + 33 |
| 8,3 | 0 |
| 8,8 | - 22 |

**EXEMPLE 10**

On charge à froid dans l'autoclave:
- 866 g d'eau désionisée
- 30 g de chlorure de triméthylaminopropylméthacrylamide
- 15 g de diméthylaminoéthylméthacrylate
- 75 g de styrène
- 66 g d'acrylate de butyle.

On porte l'autoclave à une température de 75°C; on introduit alors 7,5 g de chlorhydrate de 2-2' azobis(2 amidinopropane) avec 50 g d'eau désionisée; on attend la fin de l'exothermie (30 mn environ, ce qui correspond à un taux de transformation de 90 %), puis en continu pendant 5 heures sous débit constant:
- 594 g d'acrylate de butyle
- 675 g de styrène
- 60 g de diméthylaminoéthylméthacrylate.

ainsi que 15 g de chlorhydrate de 2-2'azobis(amidinopropane) avec 420 g d'eau désionisée.
On laisse la réaction se dérouler pendant 4 heures.
On obtient un latex stable exempt de croûtes présentant les caractéristiques suivantes:

| | | |
|---|---|---|
| - pH | 8,2 | |
| - quantité d'extrait sec | 41,3 | % en poids |
| - viscosité Brookfield (50 t/mn) | 108 | mPa.s |
| - diamètre moyen des particules | 0,12 | µ |
| - taux de grains | 468 | ppm |

Les résultats de mesure de potentiel zéta sont les suivants:

| pH | potentiel zêta en mV |
|---|---|
| 4,5 | + 41 |
| 8,4 | 0 |
| 9 | - 29 |

**EXEMPLE 11**

On charge à froid dans l'autoclave:
- 866 g d'eau désionisée
- 7,5 g de bromure de cétyldiméthylbenzylammonium
- 15 g de chlorure de triméthylaminopropylméthacrylamide
- 45 g de diméthylaminoéthylacrylate.

On porte l'autoclave à une température de 75°C; on introduit alors 7,5 g de chlorhydrate de 2-2' azobis(2 amidinopropane) avec 50 g d'eau désionisée, puis en continu pendant 5 heures sous débit constant:
- 750 g d'acrylate de butyle
- 615 g de styrène
- 75 g de diméthylaminoéthylacrylate.

On laisse la réaction se dérouler pendant 4 heures à 75°C.
On obtient un latex exempt de croûtes présentant les caractéristiques suivantes:

| | | |
|---|---|---|
| - pH | 7,6 | |
| - quantité d'extrait sec | 42 | % en poids |
| - viscosité Brookfield (50 t/mn) | 82 | mPa.s |
| - diamètre moyen des particules | 0,1 | µ |
| - taux de grains | 298 | ppm |

Les résultats de mesure de potentiel zéta sont les suivants:

| pH | potentiel zéta en mV |
|---|---|
| 4,5 | + 42 |
| 8,9 | 0 |
| 9,5 | - 38 |

**EXEMPLE 12**

On répète l'opération décrite à l'exemple 5, mais en introduisant toutefois les 15 g de diméthylaminométhylacrylate non pas en continu pendant 5 heures, mais en continu pendant 2 heures, à savoir entre 4 heures et 6 heures de réaction (c'est-à-dire après un taux de transformation de 92 % environ).
On obtient une dispersion qui présente les caractéristiques suivantes:

| | | |
|---|---|---|
| - pH | 8 | |
| - quantité d'extrait sec | 45,2 | % en poids |
| - viscosité Brookfield (50 t/mn) | 120 | mPa.s |
| - diamètre moyen des particules | 0,12 | µ |
| - taux de grains | 412 | ppm |

Les résultats de mesure de potentiel zéta sont les suivants:

| pH | potentiel zéta en mV |
|---|---|
| 4,5 | + 38 |
| 8 | 0 |
| 8,5 | - 20 |

**EXEMPLE 13**

On charge à froid dans l'autoclave

- 333 g du latex obtenu à l'exemple 1 (c'est-à-dire 150 g de matière sèche), ce qui correspond à environ 10 % en poids dudit latex;
- 866 g d'eau désionisée;
- 15 g de chlorure de triméthylaminopropylméthacrylamide

On porte l'autoclave à une température de 75° C, on introduit alors 7,5 g de chlorhydrate de 2,2' azobis(2-amidinopropane) comme amorceur cationique avec 50 g d'eau désionisée, puis en continu pendant 5 heures sous débit constant:

- 750 g d'acrylate de butyle,
- 675 g de styrène,
- 60 g de diméthylaminoéthylacrylate.

On laisse ensuite la réaction se poursuivre pendant 4 heures à 75° C. Après un temps total de fonctionnement de 9 heures la réaction est arrêtée par refroidissement.

Le produit obtenu est un latex stable sans croûtes présentant les caractéristiques suivantes:

| | | |
|---|---|---|
| - pH | 8,1 | |
| - quantité d'extrait sec | 42,1 | % |
| - viscosité Brookfield (50t/mn) | 112 | mP.as |
| - diamètre moyen des particules | 0,22 | µ |
| - taux de grains. | 378 | ppm |

Les résultats de mesure de potentiel zéta sont les suivants:

| pH | potentiel zêta en mV |
|---|---|
| 4,5 | + 49 |
| 7,9 | 0 |
| 8,5 | - 36 |

**EXEMPLE 14**

L'opération décrite à l'exemple 4 est répétée en remplaçant les 15 g de chlorure de triméthylaminopropylméthacrylamide par 15 g de bromure de 1-méthyl-2 vinylpyridinium.
On obtient un latex présentant les caractéristiques suivantes:

| | | |
|---|---|---|
| - pH | 7,6 | |
| - quantité d'extrait sec | 46,2 | % |
| - viscosité Brookfield | 188 | mPa.s |
| - diamètre moyen des particules | 0,12 | μ |
| - taux de grains | 425 | ppm |

Les résultats de mesure du potentiel zéta sont les suivants:

| pH | potentiel zêta en mV |
|---|---|
| 4,5 | + 39 |
| 8,1 | 0 |
| 9 | - 22 |

**EXEMPLE 15**

L'opération décrite à l'exemple 6 est répétée en remplaçant les 15 g de chlorure de triméthylaminopropylméthacrylamide par 15 g de chlorure de triméthylaminoéthylacrylamide.
On obtient un latex présentant les caractéristiques suivantes

| | | |
|---|---|---|
| - pH | 7,9 | |
| - quantité d'extrait sec | 45,7 | % |
| - Viscosité Brookfield | 165 | mPa.s |
| - diamètre moyen des particules | 0,12 | µ |
| - taux de grains | 365 | ppm |

Les résultats de mesure du potentiel zéta sont les suivants:

| pH | potentiel zêta en mV |
|---|---|
| 4,5 | + 42 |
| 8,9 | 0 |
| 9 | - 28 |

**Revendications** pour les Etats contractants BE CH DE FR GB IT LI LU NL SE

1) Dispersions aqueuses stables et amphotères de polymères synthétiques caractérisées en ce qu'elles sont obtenues en mettant en présence au moins un composé azoté insaturé totalement ou partiellement hydrolysable en milieu acide ou alcalin, susceptible de générer des charges anioniques par hydrolyse totale ou partielle en milieu basique et ayant pour formule:

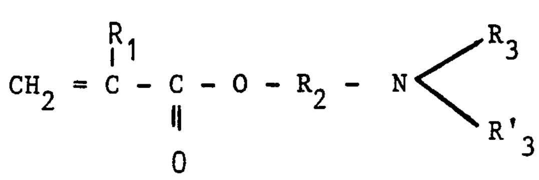

où: . $R_1$ représente un atome d'hydrogène ou un groupe méthyle,
. $R_2$ représente un groupe méthylène ou éthylène,
. $R_3$ représente un atome d'hydrogène ou un groupe alkyle linéaire contenant de 1 à 4 atomes de carbone,
. $R'_3$ représente un atome d'hydrogène ou un groupe alkyle linéaire contenant de 1 à 4 atomes de carbone, ainsi qu'un groupe alkyle ramifié contenant 3 ou 4 atomes de carbone lorsque $R_3$ représente un atome d'hydrogène, le nombre total d'atomes de carbone présents dans les groupes $R_2$, $R_3$ et $R'_3$ étant inférieur ou égal à 8;
avec le milieu réactionnel (A) d'une opération de polymérisation en émulsion aqueuse d'au moins un monomère non ionogène copolymérisable avec ledit composé azoté insaturé hydrolysable, ledit milieu réactionnel (A) contenant des charges essentiellement cationiques apportées par au moins une substance génératrice de charges cationiques liables chimiquement auxdits polymères synthétiques, la quantité de substance génératrice de charges cationiques mise en oeuvre correspondant à un rapport nombre de charge cationiques générées par ladite substance génératrice de charges cationiques/ nombre de charges anioniques

générées par le composé azoté insaturé en milieu basique inférieur à 1.

2) Dispersions selon la revendication 1 caractérisées en ce que ledit composé azoté insaturé hydrolysable en milieu acide ou alcalin est mis en présence du milieu réactionnel (A) à un stade quelconque de l'opération de polymérisation du ou des monomères non ionogènes copolymérisables avec le composé azoté insaturé hydrolysable.

3) Dispersions selon la revendication 1 ou 2 caractérisées en ce que le composé azoté insaturé hydrolysable est du diméthylaminométhylacrylate ou méthacrylate, du diméthylaminoéthylacrylate ou méthacrylate, du tertiobutylaminométhylacrylate ou méthacrylate ou du tertiobutylaminoéthylacrylate ou méthacrylate.

4) Dispersions selon l'une quelconque des revendications précédentes caractérisées en ce que le ou les monomères non ionogènes copolymérisables avec le composé azoté insaturé sont des composés vinylaromatiques, des esters vinyliques, des nitriles éthyléniques, des esters carboxyliques éthyléniques, des dialkylesters de diacides carboxyliques éthyléniques, ou des amides éthyléniques et leurs dérivés N-substitués.

5) Dispersions selon l'une quelconque des revendications précédentes caractérisées en ce que la substance génératrice de charges cationiques est constituée par un amorceur de polymérisation générateur de radicaux présentant une extrémité cationique et/ou un sel insaturé copolymérisable d'onium polycoordiné d'un élément des groupes VB et VIB.

6) Dispersions selon la revendication 5, caractérisées en ce que la substance génératrice de charges cationiques est un sel insaturé d'ammonium quaternaire de formule:

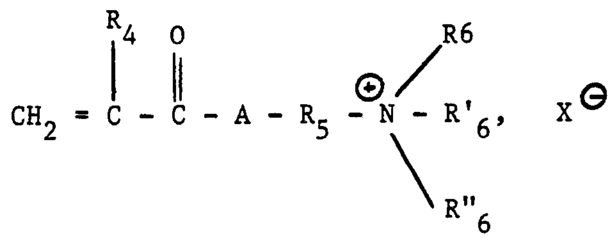

où . $X^-$ est choisi parmi les anions suivants: $Cl^-$, $Br^-$, $I^-$, $SO_4H^-$, $SO_4^{--}$, $CH_3SO_4^-$, $C_2H_5SO_4^-$, $CH_3COO^-$,

. $R_4$ représente un atome d'hydrogène ou un groupe méthyle

. A représente un atome d'oxygène ou un groupe -NH

. $R_5$ représente un groupe alkylène linéaire ou ramifié contenant de 1 à 18 atomes de carbone;. $R_6$, $R'_6$, $R''_6$ sont semblables ou différents et représentent un groupe alkyle contenant de 1 à 4 atomes de carbone éventuellement substitué par un radical hydroxy, un groupe phényle éventuellement substitué par un radical alkyle contenant de 1 à 9 atomes de carbone.

. le nombre total d'atomes de carbone présent dans les groupes $R_5$, $R_6$, $R'_6$ et $R''_6$ est supérieur à 4 quand A représente de l'oxygène.

7) Dispersions selon la revendication 6, caractérisées en ce que le sel insaturé d'ammonium quaternaire est du chlorure de triméthylaminoéthylacrylamide ou méthacrylamide, du bromure de triméthylaminopropylacrylamide ou méthacrylamide, du méthylsulfate de triméthylaminobutylacrylamide ou méthacrylamide, ou du chlorure de triméthylaminopropylméthacrylate.

8) Dispersions selon la revendication 5) caractérisées en ce que la substance génératrice de charge cationique est un sel insaturé de pyridinium, de quinolinium, d'imidazolium ou de benzimidazolium.

9) Dispersions selon l'une quelconque des revendications précédentes caractérisées en ce que la mise en oeuvre de la substance génératrice de charges cationiques dans le milieu réactionnel (A) est préalable à celle du composé azoté insaturé hydrolysable ou concomittante de celle dudit composé azoté insaturé.

10) Dispersions selon l'une quelconque des revendications précédentes caractérisées en ce que ladite substance génératrice de charges cationiques est présente dans le milieu réactionnel (A) au départ de l'opération de polymérisation par l'intermédiaire d'une "semence cationique".

11) Dispersions selon l'une quelconque des revendications précédentes caractérisées en ce que la quantité de composé azoté insaturé hydrolysable correspond à 1-20 % en poids par rapport au poids de monomère(s) non ionogène(s).

12) Dispersions selon la revendication 11, caractérisées en ce que la quantité de composé azoté insaturé correspond à 1-10 % en poids par rapport au poids de monomère(s) non ionogène(s).

13) Dispersions selon l'une quelconque des revendications précédentes caractérisées en ce que pour un taux d'hydrolyse de 90% du composé azoté insaturé hydrolysable et de 0 % de la substance génératrice de charges cationiques, on met en oeuvre une quantité de substance génératrice de charges cationiques correspondant à un rapport molaire R = nombre de moles de substance génératrice de charges cationiques + nombre de moles de composé azoté insaturé hydrolysable/nombre de moles de monomères non ionogènes, compris entre 1 et 15.

14) Dispersions selon l'une quelconque des revendications précédentes caractérisées en ce que l'opération de polymérisation est réalisée à une température comprise entre 60 et 90° C à un pH quelconque en présence d'un amorceur cationique ou non-ionique et éventuellement d'un agent émulsifiant cationique ou non-ionique.

15) Application des dispersions aqueuses stables et amphotères de polymères synthétiques faisant l'objet de l'une quelconque des revendications précédentes, comme liants.

**Revendications** pour l'Etat contractant AT

1) Procédé de préparation de dispersions aqueuses stables et amphotères de polymères synthétiques caractérisé en ce qu'on met en présence au moins un composé azoté insaturé totalement ou partiellement hydrolysable en milieu acide ou alcalin, susceptible de générer des charges anioniques par hydrolyse totale ou partielle en milieu basique et ayant pour formule:

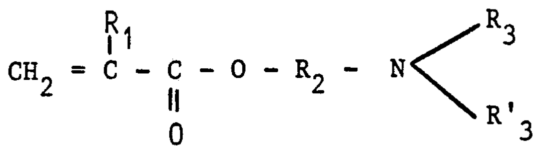

où: . $R_1$ représente un atome d'hydrogène ou un groupe méthyle,

. $R_2$ représente un groupe méthylène ou éthylène,

. $R_3$ représente un atome d'hydrogène ou un groupe alkyle linéaire contenant de 1 à 4 atomes de carbone,

. $R'_3$ représente un atome d'hydrogène ou un groupe alkyle linéaire contenant de 1 à 4 atomes de carbone, ainsi qu'un groupe alkyle ramifié contenant 3 ou 4 atomes de carbone lorsque $R_3$ représente un atome d'hydrogène, le nombre total d'atomes de carbone présents dans les groupes $R_2$, $R_3$ et $R'_3$ étant inférieur ou égal à 8;

avec le milieu réactionnel (A) d'une opération de polymérisation en émulsion aqueuse d'au moins un monomère non ionogène copolymérisable avec ledit composé azoté insaturé hydrolysable, ledit milieu réactionnel (A) contenant des charges essentiellement cationiques apportées par au moins une substance génératrice de charges cationiques liables chimiquement auxdits polymères synthétiques, la quantité de substance génératrice de charges cationiques mise en oeuvre correspondant à un rapport nombre de charge cationiques générées par ladite substance génératrice de charges cationiques/ nombre de charges anioniques générées par le composé azoté insaturé en milieu basique inférieur à 1.

2) Procédé selon la revendication 1 caractérisé en ce que ledit composé azoté insaturé hydrolysable en milieu acide ou alcalin est mis en présence du milieu réactionnel (A) à un stade quelconque de l'opération de polymérisation du ou des monomères non ionogènes copolymérisables avec le composé azoté insaturé hydrolysable.

3) Procédé selon la revendication 1 ou 2 caractérisé en ce que le composé azoté insaturé hydrolysable est du diméthylaminométhylacrylate ou méthacrylate, du diméthylaminoéthylacrylate ou méthacrylate, du tertiobutylaminométhylacrylate ou méthacrylate ou du tertiobutylaminoéthylacrylate ou méthacrylate.

4) Procédé selon l'une quelconque des revendications précédentes caractérisé en ce que le ou les monomères non ionogènes copolymérisables avec le composé azoté insaturé sont des composés vinylaromatiques, des esters vinyliques, des nitriles éthyléniques, des esters carboxyliques éthyléniques, des dialkylesters de diacides carboxyliques éthyléniques, ou des amides éthyléniques et leurs dérivés N-substitués.

5) Procédé selon l'une quelconque des revendications précédentes caractérisé en ce que la substance génératrice de charges cationiques est constituée par un amorceur de polymérisation générateur de radicaux présentant une extrémité cationique et/ou un sel insaturé copolymérisable d'onium polycoordiné d'un élément des groupes VB et VIB.

6) Procédé selon la revendication 5, caractérisé en ce que la substance génératrice de charges cationiques est un sel insaturé d'ammonium quaternaire de formule:

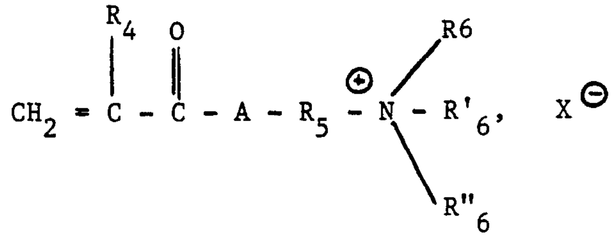

où . $X^-$ est choisi parmi les anions suivants: $Cl^-$, $Br^-$, $I^-$, $SO_4H^-$, $SO_4^{--}$, $CH_3SO_4^-$, $C_2H_5SO_4^-$, $CH_3COO^-$,

. $R_4$ représente un atome d'hydrogène ou un groupe méthyle

. A représente un atome d'oxygène ou un groupe -NH

. $R_5$ représente un groupe alkylène linéaire ou ramifié contenant de 1 à 18 atomes de carbone;. $R_6$, $R'_6$, $R''_6$ sont semblables ou différents et représentent un groupe alkyle contenant de 1 à 4 atomes de carbone éventuellement substitué par un radical hydroxy, un groupe phényle éventuellement substitué par un radical alkyle contenant de 1 à 9 atomes de carbone.

. le nombre total d'atomes de carbone présent dans les groupes $R_5$, $R_6$, $R'_6$ et $R''_6$ est supérieur à 4 quand A représente de l'oxygène.

7) Procédé selon la revendication 6, caractérisé en ce que le sel insaturé d'ammonium quaternaire est du chlorure de triméthylaminoéthylacrylamide ou méthacrylamide, du bromure de triméthylaminopropylacrylamide ou méthacrylamide, du méthylsulfate de triméthylaminobutylacrylamide ou méthacrylamide, ou du chlorure de triméthylaminopropylméthacrylate.

8) Procédé selon la revendication 5) caractérisé en ce que la substance génératrice de charge cationique est un sel insaturé de pyridinium, de quinolinium, d'imidazolium ou de benzimidazolium.

9) Procédé selon l'une quelconque des revendications précédentes caractérisé en ce que la mise en oeuvre de la substance génératrice de charges cationiques dans le milieu réactionnel (A) est préalable à celle du composé azoté insaturé hydrolysable ou concomittante de celle dudit composé azoté insaturé.

10) Procédé selon l'une quelconque des revendications précédentes caractérisé en ce que ladite substance génératrice de charges cationiques est présente dans le milieu réactionnel (A) au départ de l'opération de polymérisation par l'intermédiaire d'une "semence cationique".

11) Procédé selon l'une quelconque des revendications précédentes caractérisé en ce que la quantité de composé azoté insaturé hydrolysable correspond à 1-20 % en poids par rapport au poids de monomère(s) non ionogène(s).

12) Procédé selon la revendication 11, caractérisé en ce que la quantité de composé azoté insaturé correspond à 1-10 % en poids par rapport au poids de monomère(s) non ionogène(s).

13) Procédé selon l'une quelconque des revendications précédentes caractérisé en ce que pour un taux d'hydrolyse de 90% du composé azoté insaturé hydrolysable et de 0 % de la substance génératrice de charges cationiques, on met en oeuvre une quantité de substance génératrice de charges cationiques correspondant à un rapport molaire R = nombre de moles de substance génératrice de charges cationiques + nombre de moles de composé azoté insaturé hydrolysable/nombre de moles de monomères non ionogènes, compris entre 1 et 15.

14) Procédé selon l'une quelconque des revendications précédentes caractérisé en ce que l'opération de polymérisation est réalisée à une température comprise entre 60 et 90° C à un pH quelconque en présence d'un amorceur cationique ou non-ionique et éventuellement d'un agent émulsifiant cationique ou non-ionique.

15) Application des dispersions aqueuses stables et amphotères de polymères synthétiques obtenues selon le procédé faisant l'objet de l'une quelconque des revendications précédentes, comme liants.

**Patentansprüche** für die Vertragsstaaten: BE, CH, DE, FR, GB, IT, LI,

LU, NL, SE

1. Stabile und amphotere wässrige Dispersionen von synthetischen Polymeren, dadurch gekennzeichnet, daß diese erhalten werden, indem man mindestens eine stickstoffhaltige ungesättigte Verbindung, die völlig oder teilweise in saurem oder alkalischem Milieu hydrolisierbar ist, und die geeignet ist, durch völlige oder teilweise Hydrolyse in basischem Milieu anionische Ladungen zu erzeugen und die nachfolgende Formel hat:

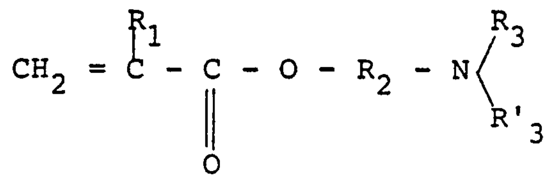

wobei: - $R_1$ ein Wasserstoffatom oder eine Methylgruppe ist,
- $R_2$ eine Methylen- oder Ethylengruppe ist,
- $R_3$ ein Wasserstoffatom oder eine unverzweigte Alkylgruppe mit 1 bis 4 C-Atomen ist,
- $R'_3$ ein Wasserstoffatom, eine unverzweigte Alkylgruppe mit 1 bis 4 C-Atomen oder eine verzweigte Alkylgruppe mit 3 oder 4 C-Atomen ist, wenn $R_3$ ein Wasserstoffatom darstellt, und die Anzahl der C-Atome insgesamt in den Gruppen $R_2$, $R_3$ und $R'_3$ geringer oder gleich 8 ist;

dem Reaktionsmedium (A) eines Polymerisierungsvorgangs in wässriger Emulsion mindestens eines nicht ionogenen Monomeren zugibt, das copolymerisierbar ist mit der obenstehenden stickstoffhaltigen ungesättigten und hydrolisierbaren Verbindung, wobei das genannte Reaktionsmedium (A) im wesentlichen kationische Ladungsträger enthält, die von mindestens einer Erzeugersubstanz für kationische Ladungsträger geliefert werden und die mit genannten syntetischen Polymeren chemisch verknüpfbar ist, wobei die benutzte Menge der Erzeugersubstanz für die kationischen Ladungsträger so gewählt wird, daß das Verhältnis der Anzahl von dieser Erzeugersubstanz gelieferter kationischer Ladungsträger zur Anzahl der anionischen Ladungsträger, die von der ungesättigten stickstoffhaltigen Verbindung erzeugt werden, in basischem Milieu kleiner ist als 1.

2. Dispersionen nach Anspruch 1, dadurch gekennzeichnet, daß man die genannte ungesättigte stickstoffhaltige Verbindung, die im alkalischen oder sauren Milieu hydrolisierbar ist, zu dem Reaktionsmedium (A) in irgendeinem Stadium des Polymerisationsvorgangs des oder der nicht ionogenen Monomeren, die mit der ungesättigten hydrolisierbaren stickstoffhaltigen Verbindung copolymerisierbar sind, zugibt.

3. Dispersionen nach den Ansprüchen 1 oder 2, dadurch gekennzeichnet, daß die ungesättigte hydrolisierbare stickstoffhaltige Verbindung Dimethylaminomethylacrylat oder -methacrylat, Dimethylaminoäthylacrylat oder -methacrylat, Tertiärbutylaminomethylacrylat oder -methacrylat oder Tertiärbutylaminoäthylacrylat oder -methacrylat ist.

4. Dispersionen nach einem der vorhergehenden Ansprüche, dadurch gekennzeichnet, daß das oder die nicht ionogenen Monomeren, die mit der ungesättigten stickstoffhaltigen Verbindung copolymerisierbar sind, vinylsubstituierte Aromaten, Vinylester, ethylenische Nitrile, ethylenische Carboxylester, Dialkylester von ethylenischen Dicarbonsäuren oder ethylenische Amide oder ihre stickstoffsubstituierten Derivate sind.

5. Dispersionen nach einem der vorhergehenden Ansprüche, dadurch gekennzeichnet, daß als Erzeugersubstanz für kationische Ladungsträger ein Radikale erzeugender Polymerisationsstarter mit einem kationischen Ende und/oder ein copolymerisierbares ungesättigtes Oniumsalz, das mit einem Element der Gruppe VB oder VIB des Periodensystems polykoordiniert ist, vorgesehen ist.

6. Dispersionen nach Anspruch 5, dadurch gekennzeichnet, daß die Substanz zur Erzeugung kationischer Ladungen ein ungesättigtes quaternäres Ammoniumsalz mit folgender Formel ist:

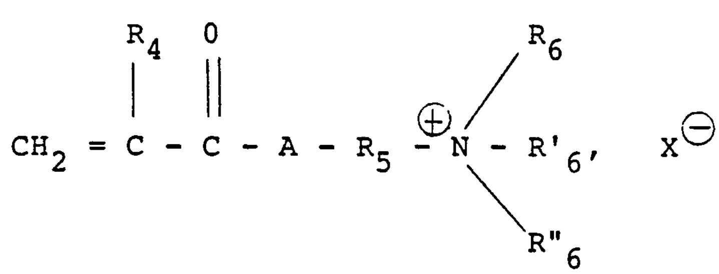

wobei - $X^-$ aus der Gruppe der folgenden Anionen ausgewählt wird: $Cl^-$, $Br^-$, $I^-$, $SO_4H^-$, $SO_4^{--}$, $CH_3SO_4^-$, $C_2H_5SO_4^-$, $CH_3COO^-$,
- $R_4$ ein Wasserstoffatom oder eine Methylgruppe ist,
- A ein Sauerstoffatom oder eine NH-Gruppe ist,

- $R_5$ eine lineare Alkylengruppe oder eine verzweigte Alkylengruppe mit 1 bis 18 C-Atomen ist; $R_6$, $R'_6$, $R''_6$ jeweils gleich oder unterschiedlich sind und eine Alkylgruppe mit 1 bis 4 C-Atomen darstellen, die eventuell durch eine Hydroxygruppe substituiert ist, oder eine Phenylgruppe, die eventuell durch eine Alkylgruppe substituiert ist, mit jeweils 1 bis 9 C-Atomen;
- wobei die Anzahl der C-Atome insgesamt in den Gruppen $R_5$, $R_6$, $R'_6$ und $R''_6$ größer ist als 4, wenn A ein Sauerstoffatom ist.

7. Dispersionen nach Anspruch 6, dadurch gekennzeichnet, daß das ungesättigte quaternäre Ammoniumsalz das Chlorid des Trimethylaminoethylacrylamids oder -methacrylamids, das Bromid des Trimethylaminopropylacrylamids oder -methacrylamids, das Methylsulfat des Trimethylaminobutylacrylamids oder -methacrylamids oder das Chlorid des Trimethylaminopropylmethacrylats ist.

8. Dispersionen nach Anspruch 5, dadurch gekennzeichnet, daß die Substanz zur Erzeugung kationischer Ladungsträger ein ungesättigtes Pyridinium, Chinolinium, Imidazolium oder Benzimidazoliumsalz ist.

9. Dispersionen nach einem der vorhergehenden Ansprüche, dadurch gekennzeichnet, daß die Zugabe der kationischen Ladungsträger erzeugenden Substanz zum Reaktionsmedium (A) vor oder gleichzeitig mit der Zugabe der ungesättigten hydrolisierbaren stickstoffhaltigen Verbindung erfolgt.

10. Dispersionen nach einem der vorhergehenden Ansprüche, dadurch gekennzeichnet, daß die genannte kationische Ladungsträger erzeugende Substanz zu Beginn des Polymerisationsvorgangs mittels eines "kationischen Keims" im Reaktionsmedium (A) anwesend ist.

11. Dispersionen nach einem der vorhergehenden Ansprüche, dadurch gekennzeichnet, daß die Menge der stickstoffhaltigen ungesättigten hydrolisierbaren Verbindung 1 bis 20 Gewichtsprozent im Verhältnis zum Gewicht des nicht ionogenen Monomeren beträgt.

12. Dispersionen nach Anspruch 11, dadurch gekennzeichnet, daß die Menge der ungesättigten stickstoffhaltigen Verbindung 1 bis 10 Gewichtsprozent im Verhältnis zum Gewicht des nicht ionogenen Monomeren beträgt.

13. Dispersionen nach einem der vorhergehenden Ansprüche, dadurch gekennzeichnet, daß man um einen Hydrolysegrad von 90 % der hydrolisierbaren ungesättigten stickstoffhaltigen Verbindung und von 0 % der Substanz zur Erzeugung kationischer Ladungsträger zu erhalten, eine Menge an kationische Ladungsträger erzeugender Substanz zugibt, die einem Mol-Verhältnis

R = Anzahl der Mole an kationische Ladungsträger erzeugender Substanz plus Anzahl der Mole an ungesättigter hydrolisierbarer stickstoffhaltiger Substanz bezogen auf die Anzahl der Mole an nicht ionogenem Monomeren zwischen 1 und 15 entspricht.

14. Dispersionen nach einem der vorhergehenden Ansprüche, dadurch gekennzeichnet, daß der Polymerisationsvorgang bei einer Temperatur zwischen 60° und 90°C und beliebigem PH-Wert in Anwesenheit eines kationischen oder nicht ionischen Starters und eventuell eines emulsierenden kationischen oder ionischen Agens durchgeführt wird.

15. Verwendung der stabilen und amphoteren wässrigen Dispersionen von synthetischen Polymeren, die Gegenstand eines der vorhergehenden Ansprüche sind, als Bindemittel.

**Patentansprüche** für den Vertragsstaat: AT

1. Verfahren zur Herstellung stabiler und amphoterer wässriger Dispersionen von synthetischen Polymeren, dadurch gekennzeichnet, daß man mindestens eine stickstoffhaltige ungesättigte Verbindung, die völlig oder teilweise in saurem oder alkalischem Milieu hydrolisierbar ist, und die geeignet ist, durch völlige oder teilweise Hydrolyse in basischem Milieu anionische Ladungen zu erzeugen und die nachstehende Formel hat:

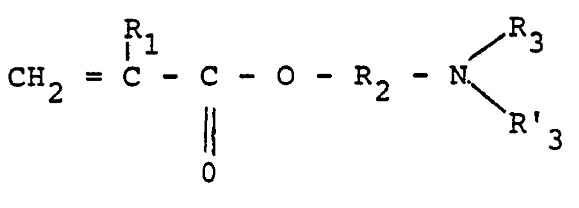

wobei: - $R_1$ ein Wasserstoffatom oder eine Methylgruppe ist,
- $R_2$ eine Methylen- oder Ethylengruppe ist,
- $R_3$ ein Wasserstoffatom oder eine unverzweigte Alkylgruppe mit 1 bis 4 C-Atomen ist,
- $R'_3$ ein Wasserstoffatom, eine unverzweigte Alkylgruppe mit 1 bis 4 C-Atomen oder eine verzweigte Alkylgruppe mit 3 oder 4 C-Atomen ist, wenn $R_3$ ein Wasserstoffatom darstellt, und die Anzahl der C-Atome insgesamt in den Gruppen $R_2$, $R_3$ und $R'_3$ geringer oder gleich 8 ist;

zu dem Reaktionsmedium (A) eines Polymerisierungsvorgangs in wässriger Emulsion mindestens eines nicht ionogenen Monomeren gibt, das copolymerisierbar ist mit der obenstehenden stickstoffhaltigen ungesättigten und hydrolisierbaren Verbindung, wobei das genannte Reaktionsmedium (A) im wesentlichen kationische

Ladungsträger enthält, die von mindestens einer Erzeugersubstanz für kationische Ladungsträger geliefert werden und die mit genannten synthetischen Polymeren chemisch verknüpfbar ist, wobei die benutzte Menge der Erzeugersubstanz für die kationischen Ladungsträger so gewählt wird, daß das Verhältnis der Anzahl von dieser Erzeugersubstanz gelieferter kationischer Ladungsträger zur Anzahl der anionischen Ladungsträger, die von der ungesättigten stickstoffhaltigen Verbindung erzeugt werden, in basischem Milieu kleiner ist als 1.

2. Verfahren nach Anspruch 1, dadurch gekennzeichnet, daß man die genannte ungesättigte stickstoffhaltige Verbindung, die im alkalischen oder sauren Milieu hydrolisierbar ist, zu dem Reaktionsmediums (A) in irgendeinem Stadium des Polymerisationsvorgangs des oder der nicht ionogenen Monomeren, die mit der ungesättigten hydrolisierbaren stickstoffhaltigen Verbindung copolymerisierbar sind, zugibt.

3. Verfahren nach den Ansprüchen 1 oder 2, dadurch gekennzeichnet, daß die ungesättigte hydrolisierbare stickstoffhaltige Verbindung Dimethylaminomethylacrylat oder -methacrylat, Dimethylaminoäthylacrylat oder -methacrylat, Tertiärbutylaminomethylacrylat oder -methacrylat oder Tertiärbutylaminoäthylacrylat oder -methacrylat ist.

4. Verfahren gemäß einem der vorhergehenden Ansprüche, dadurch gekennzeichnet, daß das oder die nicht ionogenen Monomeren, die mit der ungesättigten stickstoffhaltigen Verbindung copolymerisierbar sind, vinylsubstituierte Aromaten, Vinylester, ethylenische Nitrile, ethylenische Carboxylester, Dialkylester von ethylenischen Dicarbonsäuren oder ethylenische Amide oder ihre stickstoffsubstituierten Derivate sind.

5. Verfahren gemäß einem der vorhergehenden Ansprüche, dadurch gekennzeichnet, daß als Erzeugersubstanz für kationische Ladungsträger ein Radikale erzeugender Polymerisationsstarter mit einem kationischen Ende und/oder ein copolymerisierbares ungesättigtes Oniumsalz, das mit einem Element der Gruppe VB oder VIB des Periodensystems polykoordiniert ist, vorgesehen ist.

6. Verfahren nach Anspruch 5, dadurch gekennzeichnet, daß die Substanz zur Erzeugung kationischer Ladungen ein ungesättigtes quaternäres Ammoniumsalz mit folgender Formel ist:

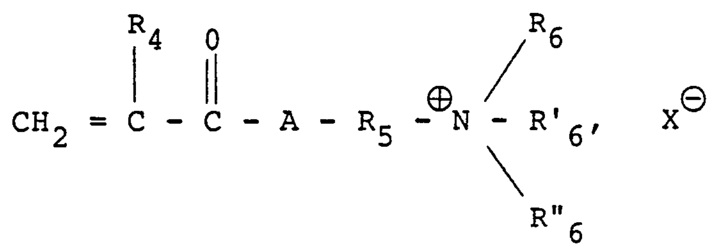

wobei - $X^-$ aus der Gruppe der folgenden Anionen ausgewählt wird: $Cl^-$, $Br^-$, $I^-$, $SO_4H^-$, $SO_4^{--}$, $CH_3SO_4^-$, $C_2H_5SO_4^-$, $CH_3COO^-$,

- $R_4$ ein Wasserstoffatom oder eine Methylgruppe ist,
- A ein Sauerstoffatom oder eine NH-Gruppe ist,
- $R_5$ eine lineare Alkylengruppe oder eine verzweigte Alkylengruppe mit 1 bis 18 C-Atomen ist; $R_6$, $R'_6$, $R''_6$ jeweils gleich oder unterschiedlich sind und eine Alkylgruppe mit 1 bis 4 C-Atomen darstellen, die eventuell durch eine Hydroxygruppe substituiert ist, oder eine Phenylgruppe, die eventuell durch eine Alkylgruppe substituiert ist, mit jeweils 1 bis 9 C-Atomen;
- wobei die Anzahl der C-Atome insgesamt in den Gruppen $R_5$, $R_6$, $R'_6$ und $R''_6$ größer ist als 4, wenn A ein Sauerstoffatom ist.

7. Verfahren nach Anspruch 6, dadurch gekennzeichnet, daß das ungesättigte quaternäre Ammoniumsalz das Chlorid des Trimethylaminoethylacrylamids oder -methacrylamids, das Bromid des Trimethylaminopropylacrylamids oder -methacrylamids, das Methylsulfat des Trimethylaminobutylacrylamids oder -methacrylamids oder das Chlorid des Trimethylaminopropylmethacrylats ist.

8. Verfahren nach Anspruch 5, dadurch gekennzeichnet, daß die Substanz zur Erzeugung kationischer Ladungsträger ein ungesättigtes Pyridinium, Chinolinium, Imidazolium oder Benzimidazoliumsalz ist.

9. Verfahren nach einem der vorhergehenden Ansprüche, dadurch gekennzeichnet, daß die Zugabe der kationischen Ladungsträger erzeugenden Substanz zum Reaktionsmedium (A) vor oder gleichzeitig mit der Zugabe der ungesättigten hydrolisierbaren stickstoffhaltigen Verbindung erfolgt.

10. Verfahren nach einem der vorhergehenden Ansprüche, dadurch gekennzeichnet, daß die genannte kationische Ladungsträger erzeugende Substanz zu Beginn des Polymerisationsvorgangs mittels eines "kationischen Keims" im Reaktionsmedium (A) anwesend ist.

11. Verfahren nach einem der vorhergehenden Ansprüche, dadurch gekennzeichnet, daß die Menge der stickstoffhaltigen ungesättigten hydrolisierbaren Verbindung 1 bis 20 Gewichtsprozent im Verhältnis zum Gewicht des nicht ionogenen Monomeren beträgt.

12. Verfahren nach Anspruch 11, dadurch gekennzeichnet, daß die Menge der ungesättigten stickstoffhaltigen Verbindung 1 bis 10 Gewichtsprozent im Verhältnis zum Gewicht des nicht ionogenen Monomeren beträgt.

13. Verfahren nach einem der vorhergehenden Ansprüche, dadurch gekennzeichnet, daß man um einen Hydrolysegrad von 90 % der hydrolisierbaren ungesättigten stickstoffhaltigen Verbindung und von 0 % der

Substanz zur Erzeugung kationischer Ladungsträger zu erhalten, eine Menge an kationische Ladungsträger erzeugender Substanz zugibt, die einem Mol-Verhältnis

R = Anzahl der Mole an kationische Ladungsträger erzeugender Substanz plus Anzahl der Mole an ungesättigter hydrolisierbarer stickstoffhaltiger Substanz bezogen auf die Anzahl der Mole an nicht ionogenem Monomeren zwischen 1 und 15 entspricht.

14. Verfahren nach einem der vorhergehenden Ansprüche, dadurch gekennzeichnet, daß der Polymerisationsvorgang bei einer Temperatur zwischen 60° und 90°C und beliebigem pH-Wert in Anwesenheit eines kationischen oder nicht ionischen Starters und eventuell eines emulsierenden kationischen oder ionischen Agens durchgeführt wird.

15. Verwendung der stabilen und amphoteren wässrigen Dispersionen von synthetischen Polymeren, die gemäß dem Verfahren nach einem der vorhergehenden Ansprüche erhalten werden, als Bindemittel.

**Claims** for the Contracting States

BE CH DE FR GB IT LI LU NL SE

1. Stable, amphoteric aqueous dispersions of synthetic polymers characterised in that they are produced by bringing together at least one unsaturated nitrogen compound which can be totally or partially hydrolysed in an acid or alkaline medium and capable of generating anionic charges by total or partial hydrolysis in a basic medium, and being of the following formula:

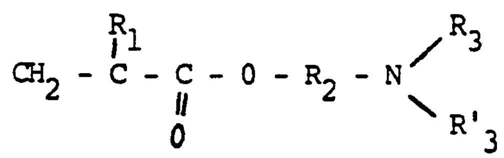

in which:

. $R_1$ represents a hydrogen atom or a methyl group,

. $R_2$ represents a methylene or ethylene group,

. $R_3$ represents a hydrogen atom or a straight alkyl group containing from 1 to 4 carbon atoms, and

. $R'_3$ represents a hydrogen atom or a straight alkyl group containing from 1 to 4 carbon atoms and a branched alkyl group containing 3 or 4 carbon atoms when $R_3$ represents a hydrogen atom, the total number of carbon atoms present in the groups $R_2$, $R_3$ and $R'_3$ being less than or equal to 8;

and the reaction medium (A) of an operation for polymerisation in aqueous emulsion of at least one non-ionogenic monomer copolymerisable with said hydrolysable unsaturated nitrogen compound, said reaction medium (A) containing essentially cationic charges provided by at least one substance for generating cationic charges which can be chemically bonded to said synthetic polymers, the amount of cationic charge-generating substance used corresponding to a ratio of the number of cationic charges generated by said cationic charge-generating substance to the number of anionic charges generated by the unsaturated nitrogen compound in a basic medium, which is less than 1.

2. Dispersions according to claim 1 characterised in that said unsaturated nitrogen ccmpound which can be hydrolysed in an acid or alkyline medium is brought together with the reaction medium (A) at any stage in the operation for polymerisation of the non-ionogenic monomer or monomers copolymerisable with the hydrolysable unsaturated nitrogen compound.

3. Dispersions according to claim 1 or claim 2 characterised in that the hydrolysable unsaturated nitrogen compound is dimethylaminomethylacrylate or methacrylate, dimethylaminoethylacrylate or methacrylate, tertiobutylaminomethylacrylate or methacrylate or tertiobutylaminoethylacrylate or methacrylate.

4. Dispersions according to any one of the preceding claims characterised in that the non-ionogenic monomer or monomers copolymerisable with the unsaturated nitrogen compound are vinylaromatic compounds, vinyl esters, ethylenic nitriles, ethylenic carboxylic esters, dialkyl esters of ethylenic carboxylic diacids or ethylenic amides and their N-substituted derivatives.

5. Dispersions according to any one of the preceding claims characterised in that the cationic charge-generating substance is formed by a radical-generating polymerisation initiator having a cationic terminal residue and/or a copolymerisable unsaturated salt of polycoordinated onium of an element of groups VB and VIB.

6. Dispersions according to claim 5 characterised in that the cationic charge-generating substance is an unsaturated quaternary ammonium salt of the following formula:

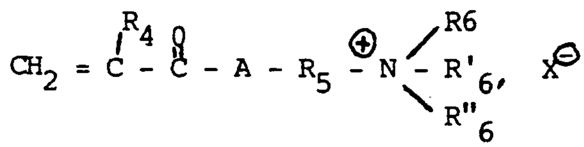

in which
. $X^-$ is selected from the following anions: $Cl^-$, $Br^-$, $I^-$, $SO_4H^-$, $SO_4^{--}$, $CH_3SO_4^-$, $C_2H_5SO_4^-$, $CH_3COO^-$,
- $R_4$ represents a hydrogen atom or a methyl group,
. A represents an oxygen atom or an -NH- group,
. $R_5$ represents a straight or branched alkylene group, containing from 1 to 18 carbon atoms;
. $R_6$, $R'_6$, $R''_6$ are similar or different and represent an alkyl group containing from 1 to 4 carbon atoms, possibly substituted by a hydroxy radical, or a phenyl group possibly substituted by an alkyl radical containing from 1 to 9 carbon atoms,
. the total number of carbon atoms in the groups $R_5$, $R_6$ $R'_6$ and $R''_6$ is higher than 4 when A represents oxygen.

7. Dispersions according to claim 6 characterised in that the unsaturated quaternary ammonium salt is trimethylaminoethylacrylamide or methacrylamide chloride, trimethylaminopropylacrylamide or methacrylamide bromide, trimethylaminobutylacrylamide or methacrylamide methyl sulphate or trimethylaminopropylmethacrylate chloride.

8. Dispersions according to claim 5 characterised in that the cationic charge-generating substance is an unsaturated salt of pyridinium, quinolinium, imidazolium or benzimidazolium.

9. Dispersions according to any one of the preceding claims characterised in that the use of the substance for generating cationic charges, in the reaction medium (A) is prior to that of the hydrolysable unsaturated nitrogen compound or concurrent with that of said unsaturated nitrogen compound.

10. Dispersions according to any one of the preceding claims characterised in that said cationic charge-generating substance is present in the reaction medium (A) at the beginning of the polymerisation step by way of a "cationic seed'.

11. Dispersions according to any one of the preceding claims characterised in that the amount of hydrolysable unsaturated nitrogen ccmpound corresponds to 1 to 20% by weight with respect to the weight of non-ionogenic monomer or monomers.

12. Dispersions according to claim 11 characterised in that the amount of unsaturated nitrogen compound corresponds to 1 to 10% by weight with respect to the weight of non-ionogenic monomer or monomers.

13. Dispersions according to any one of the preceding claims characterised in that, for a degree of hydrolysis of 90% of the hydrolysable unsaturated nitrogen ccmpound and 0% of the cationic charge-generating substance, an amount of cationic charge-generating substance corresponding to a molar ratio R = number of moles of cationic charge-generating substance + number of moles of hydrolysable unsaturated nitrogen ccmpound/ number of moles of non-ionogenic monomers of between 1 and 15 is used.

14. Dispersions according to any one of the preceding claims characterised in that the polymerisation operation is carried out at temperature of between 60 and 90°C at any pH-value in the presence of a cationic or non-ionic initiator and possibly a cationic or non-ionic emulsifying agent.

15. Use of the stable, amphoteric aqueous dispersions of synthetic polymers according to any one of the preceding claims, as binding agents.

**Claims** for the Contracting State AT

1. A process for the preparation of stable amphoteric aqueous dispersions of synthetic polymers characterised by bringing together at least one unsaturated nitrogen compound which can be totally or partially hydrolysed in an acid or alkaline medium and capable of generating anionic charges by total or partial hydrolysis in a basic medium, and being of the following formula:

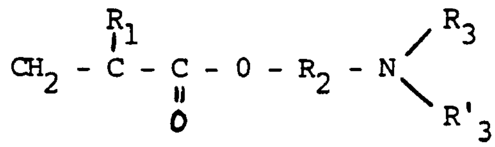

in which:
. $R_1$ represents a hydrogen atom or a methyl group,
. $R_2$ represents a methylene or ethylene group,
. $R_3$ represents a hydrogen atom or a straight alkyl group containing from 1 to 4 carbon atoms, and
. $R'_3$ represents a hydrogen atom or a straight alkyl group containing from 1 to 4 carbon atoms and a branched alkyl group containing 3 or 4 carbon atoms when $R_3$ represents a hydrogen atom, the total number of carbon atoms present in the groups $R_2$, $R_3$ and $R'_3$ being less than or equal to 8;

and the reaction medium (A) of an operation for polymerisation in aqueous emulsion of at least ore non-ionogenic monomer copolymerisable with said hydrolysable unsaturated nitrogen compound, said reaction medium (A) containing essentially cationic charges provided by at least one substance for generating cationic charges which can be chemically bonded to said synthetic polymers, the amount of cationic charge-generating substance used corresponding to a ratio of the number of cationic charges generated by said cationic charge-generating substance to the number of anionic charges generated by the unsaturated nitrogen compound in a basic medium, which is less than 1.

2. A process according to claim 1 characterised in that said unsaturated nitrogen compound which can be hydrolysed in an acid or alkyline medium is brought together with the reaction medium (A) at any stage in the operation for polymerisation of the non-ionogenic monomer or monomers copolymerisable with the hydrolysable unsaturated nitrogen compound.

3. A process according to claim 1 or claim 2 characterised in that the hydrolysable unsaturated nitrogen compound is dimethylaminomethylacrylate or methacrylate, dimethylaminoethylacrylate or methacrylate, tertiobutylaminomethylacrylate or methacrylate or tertiobutylaminoethylacrylate or methacrylate.

4. A process according to any one of the preceding claims characterised in that the non-ionogenic monomer or monomers copolymerisable with the unsaturated nitrogen compound are vinylaromatic compounds, vinyl esters, ethylenic nitriles, ethylenic carboxylic esters, dialkyl esters of ethylenic carboxylic diacids or ethylenic amides and their N-substituted derivatives.

5. A process according to any one of the preceding claims characterised in that the cationic charge-generating substance is formed by a radical-generating polymerisation initiator having a cationic terminal residue and/or a copolymerisable unsaturated salt of polycoordinated onium of an element of groups VB and VIB.

6. A process according to claim 5 characterised in that the cationic charge-generating substance is an unsaturated quaternary ammonium salt of the following formula:

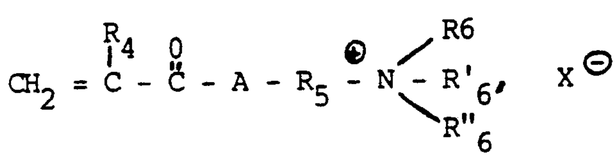

in which
. $X^-$ is selected from the following anions: $Cl^-$, $Br^-$, $I^-$, $SO_4H^-$, $SO_4^{--}$, $CH_3SO_4^-$, $C_2H_5SO_4^-$, $CH_3COO^-$,
. $R_4$ represents a hydrogen atom or a methyl group,
. A represents an oxygen atom or an -NH- group,
. $R_5$ represents a straight or branched alkylene group, containing from 1 to 18 carbon atoms;
. $R_6$, $R'_6$, $R''_6$ are similar or different and represent an alkyl group containing from 1 to 4 carbon atoms,

possibly substituted by a hydroxy radical, or a phenyl group possibly substituted by an alkyl radical containing from 1 to 9 carbon atoms,

. the total number of carbon atoms in the groups $R_5$, $R_6$, $R'_6$ and $R''_6$ is higher than 4 when A represents oxygen.

7. A process according to claim 6 characterised in that the unsaturated quaternary ammonium salt is trimethylaminoethylacrylamide or methacrylamide chloride, trimethylaminopropylacrylamide or methacrylamide bromide, trimethylaminobutylacrylamide or methacrylamide methyl sulphate or trimethylaminopropylmethacrylate chloride.

8. A process according to claim 5 characterised in that the cationic charge-generating substance is an unsaturated salt of pyridinium, quinolinium, imidazolium or benzimidazolium.

9. A process according to any one of the preceding claims characterised in that the use of the substance for generating cationic charges, in the reaction medium (A), is prior to that of the hydrolysable unsaturated nitrogen compound or concurrent with that of said unsaturated nitrogen compound.

10. A process according to any one of the preceding claims characterised in that said cationic charge-generating substance is present in the reaction medium (A) at the beginning of the polymerisation step by way of a "cationic seed'.

11. A process according to any one of the preceding claims characterised in that the amount of hydrolysable unsaturated nitrogen compound corresponds to 1 to 20% by weight with respect to the weight of non-ionogenic monomer or monomers.

12. A process according to claim 11 characterised in that the amount of unsaturated nitrogen compound corresponds to 1 to 10% by weight with respect to the weight of non-ionogenic monomer or monomers.

13. A process according to any one of the preceding claims characterised in that, for a degree of hydrolysis of 90% of the hydrolysable unsaturated nitrogen compound and 0% of the cationic charge-generating substance, an amount of cationic charge-generating substance corresponding to a molar ratio R = number of moles of cationic charge-generating substance + number of moles of hydrolysable unsaturated nitrogen compound/number of moles of non-ionogenic monomers of between 1 and 15 is used.

14. A process according to any one of the preceding claims characterised in that the polymerisation operation is carried out at a temperature of between 60 and 90°C at any pH-value in the presence of a cationic or non-ionic initiator and possibly a cationic or non-ionic emulsifying agent.

15. Use of the stable, amphoteric aqueous dispersions of synthetic polymers produced by the process according to any one of the preceding claims, as binding agents.